# DEMANDE DE BREVET EUROPEEN

(11) **EP 4 852 240 A1**
(43) Date de publication de la demande: **09.12.2026**
(21) Numéro de dépôt: 25305802.8
(22) Date de dépôt: 03.06.2025
(51) Int. Cl.: H02B 1/056, H02B 1/21, H02B 1/06

(54) **ADAPTATEUR, SYSTÈME DE PROTECTION ÉLECTRIQUE, ENSEMBLE DE DISTRIBUTION ET ARMOIRE ÉLECTRIQUE ASSOCIÉS**

(71) Demandeur: SCHNEIDER ELECTRIC INDUSTRIES SAS, 92500 Rueil-Malmaison (FR)
(72) Inventeur: BADIN, Didier, 92500 RUEIL MALMAISON (FR); LINARES, Louis, 92500 RUEIL MALMAISON (FR); AUGER, Pascal, 78180 MONTIGNY-LE-BRETONNEUX (FR); CARMENTRAN, Damien, 92500 RUEIL MALMAISON (FR)
(74) Mandataire: Lavoix

(57) **Abrégé**

La présente invention concerne un adaptateur (54), configuré pour être monté sur un dispositif de distribution de courant électrique (30) comprenant un bus de puissance avec une pluralité de barres de phase (40P), l'adaptateur (54) comprenant un support (60), configuré pour recevoir un dispositif de protection électrique, le dispositif de protection électrique étant fixé au dispositif de distribution (30) par l'intermédiaire de l'adaptateur (54).

L'adaptateur (54) comprend, en outre :
- un connecteur de phase (64), ;
- un terminal de connexion électrique de phase (65), connecté électriquement au connecteur de phase (64) et configuré pour être électriquement connecté au dispositif de protection électrique ; et
- un chariot (72), mobile en translation par rapport au support (60) le connecteur de phase (64) étant fixé au chariot (72) et mobile avec le chariot (72), afin d'être mis en contact direct avec une barre de phase (40P) donnée.

## Description

La présente invention concerne un adaptateur, un système, un ensemble de distribution et une armoire électrique associés.

Il est connu de connecter des dispositifs de protection électrique à un dispositif de distribution comprenant des barres de phase, alors que le dispositif de distribution est déjà en fonctionnement, par exemple si l'on cherche à protéger de nouvelles charges, ou si l'on cherche à remplacer des dispositifs de protection électrique défaillants. Pour cela, il est connu de connecter un câble entre l'une des barres de phase du dispositif de distribution et le dispositif de protection électrique. Cependant, pour éviter les risques d'électrisation voire d'électrocution d'un opérateur, il est généralement nécessaire d'interrompre un courant électrique circulant dans le dispositif de distribution le temps de connecter les nouveaux dispositifs de protection électrique. Cela signifie que, pendant la durée de l'opération, les charges connectées en aval des dispositifs de protection électrique ne sont pas alimentées en électricité. L'opération est ainsi complexe pour l'opérateur et génère de l'inconfort pour un utilisateur des charges, qui ne peut pas les utiliser pendant la durée de l'opération d'ajout ou de remplacement des dispositifs de protection électrique. Par ailleurs, il existe toujours un risque de sécurité pour l'opérateur, si le courant n'est pas interrompu correctement par exemple.

Le but de l'invention est alors de proposer un dispositif permettant de connecter électriquement un dispositif de protection électrique à un dispositif de distribution de manière plus simple et sécurisée.

A cet effet, l'invention a pour objet un adaptateur configuré pour être monté sur un dispositif de distribution de courant électrique comprenant un bus de puissance avec une pluralité de barres de phase, l'adaptateur comprenant :
- un support, comprenant une face interne configurée pour recevoir un dispositif de protection électrique ;
le dispositif de protection électrique étant reçu sur la face interne et fixé au dispositif de distribution par l'intermédiaire de l'adaptateur lorsque l'adaptateur est monté sur le dispositif de distribution.

Selon l'invention, l'adaptateur comprend, en outre :
- un connecteur de phase, s'étendant depuis le support selon la direction de profondeur d'adaptateur, configuré pour être en contact direct avec une barre de phase ;
- un terminal de connexion électrique de phase, s'étendant depuis le support, connecté électriquement au connecteur de phase et configuré pour être électriquement connecté à une borne d'entrée de phase du dispositif de protection électrique ; et
un chariot, mobile en translation par rapport au support parallèlement à une direction longitudinale d'adaptateur, configuré pour être disposé en regard de la pluralité de barres de phase, selon une direction de profondeur d'adaptateur, lorsque l'adaptateur est monté sur le dispositif de distribution, le connecteur de phase étant fixé au chariot et mobile avec le chariot en translation par rapport au support, afin d'être mis en contact direct avec une barre de phase donnée, et d'être connecté électriquement à la barre de phase donnée lorsque l'adaptateur est monté sur le dispositif de distribution.

Grâce à l'invention, il n'est pas nécessaire d'interrompre l'alimentation électrique dans le dispositif de distribution pour monter l'adaptateur sur le dispositif de distribution afin de fixer le dispositif de protection électrique sur le dispositif de distribution. En particulier, l'opérateur n'a pas à connecter lui-même le dispositif de protection électrique aux barres de phase avec des câbles : le simple fait de monter l'adaptateur sur le dispositif de distribution, avec le dispositif de protection électrique reçu sur l'adaptateur, permet de réaliser la connexion électrique entre le dispositif de protection électrique et l'une des barres de phase du dispositif de distribution.

Egalement, l'adaptateur facilite l'installation d'un dispositif de protection électrique en permettant de choisir la barre de phase à laquelle le dispositif de protection est connecté électriquement. En effet, le connecteur de phase étant mobile en translation avec le chariot, il est possible de déplacer le connecteur de phase le long du support, et ainsi, de positionner le connecteur de phase de sorte qu'il soit connecté à la barre de phase du dispositif de distribution choisie par l'opérateur. Il n'est ainsi pas nécessaire de relier manuellement, par exemple à l'aide de câbles, la barre de phase au dispositif de protection électrique. La fixation du dispositif de protection électrique au dispositif de distribution via le montage de l'adaptateur est ainsi plus facile et peut se réaliser sans interrompre l'alimentation électrique dans le dispositif de distribution, tout en étant sécurisée pour l'opérateur.

Suivant d'autres aspects avantageux de l'invention, l'adaptateur comprend une ou plusieurs des caractéristiques suivantes, prises isolément ou suivant toutes les combinaisons techniquement possibles :
- L'adaptateur, comprend en outre :
- un connecteur de neutre, fixe par rapport au support, configuré pour être en contact direct avec une barre de neutre du bus de puissance, et connecté électriquement à la barre de neutre lorsque l'adaptateur est monté sur le dispositif de distribution ; et
- un terminal de connexion électrique de neutre, s'étendant depuis le support, connecté électriquement au connecteur de neutre et configuré pour être électriquement connecté à une borne d'entrée de neutre du dispositif de protection électrique.

- Une course du chariot et du connecteur de phase parallèlement à la direction longitudinale d'adaptateur comprend trois positions particulières, chaque position particulière étant associée à une barre de phase, et lorsque l'adaptateur est monté sur le dispositif de distribution et que le connecteur de phase est dans l'une des positions particulières, le connecteur de phase est en contact direct avec une barre de phase associée à la position particulière.
- Le support comprend une glissière, s'étendant selon l'axe longitudinal d'adaptateur, la glissière comprenant trois ergots disposés selon l'axe longitudinal d'adaptateur ; et
- le chariot comprend un creux, et le chariot est configuré pour translater selon l'axe longitudinal d'adaptateur en coulissant le long de la glissière, et les ergots sont disposés le long de la glissière de sorte que lorsque le creux et l'un des ergots coopèrent par complémentarité de forme, le connecteur de phase est dans l'une des positions particulières.
- L'adaptateur, comprend en outre des languettes de détrompage, fixées au chariot, s'étendant depuis le chariot selon la direction de profondeur d'adaptateur, disposées de part et d'autre du connecteur de phase selon la direction longitudinale d'adaptateur, alignées avec le connecteur de phase selon la direction longitudinale d'adaptateur, et mobiles en translation parallèlement à la direction longitudinale d'adaptateur de manière solidaire au chariot, dans lequel
   l'adaptateur est montable sur le dispositif de distribution uniquement lorsque le connecteur de phase est dans l'une des positions particulières, et
   lorsque l'adaptateur est monté sur le dispositif de distribution, les languettes de détrompage coopèrent par complémentarité de formes avec des encoches du dispositif de distribution pour que le connecteur de phase soit en contact direct avec la barre de phase associée à la position particulière.
- Le support comprend une face frontale, la face frontale comprenant une fenêtre d'affichage, et l'adaptateur comprend un ruban d'affichage, une extrémité du ruban d'affichage étant fixée au chariot, le ruban d'affichage étant configuré pour s'enrouler et se dérouler lorsque le chariot translate parallèlement à la direction longitudinale d'adaptateur, des informations représentatives des barres de phases étant inscrites sur le ruban d'affichage, une portion visible du ruban d'affichage étant visible à travers la fenêtre d'affichage, et lorsque le connecteur de phase est dans l'une des positions particulières, la portion visible du ruban d'affichage comprend l'information représentative de la barre de phase correspondant à la barre de phase associée à la position particulière.
- Le support comprend en outre un capot s'étendant selon une direction longitudinale d'adaptateur, le capot comprenant un bouchon, s'étendant depuis le capot selon la direction de profondeur d'adaptateur et, lorsque l'adaptateur est monté sur le dispositif de distribution, le bouchon est inséré dans un orifice d'accès à la borne d'entrée du dispositif de protection électrique pour boucher l'orifice d'accès.
- L'adaptateur, comprend des organes de fixation, recourbés, qui sont configurés pour coopérer par complémentarité de formes avec le dispositif de distribution, de sorte que l'adaptateur est monté sur le dispositif de distribution par un mouvement de rotation autour d'un axe de montage perpendiculaire à la direction longitudinale d'adaptateur.
- Le support comprend un verrou, formé d'un bouton et de deux dents mobiles entre une position de verrouillage, dans laquelle les dents sont en saillie de la face interne, et une position de déverrouillage, dans laquelle les dents sont escamotées, et lorsque l'adaptateur est monté sur le dispositif de distribution, le dispositif de distribution appuie sur le bouton et déplace les dents en position de verrouillage, qui viennent en prise avec un organe de verrouillage du dispositif de protection électrique, afin de verrouiller le dispositif de protection électrique sur l'adaptateur.
- L'adaptateur comprend des parois d'isolement, fixées au chariot et s'étendant depuis le chariot selon la direction de profondeur d'adaptateur, les parois d'isolement étant disposées de part et d'autre du connecteur de phase selon une direction transversale d'adaptateur.

L'invention concerne également un système de protection électrique comprenant un adaptateur et un dispositif de protection électrique, comprenant une borne d'entrée de phase, connectée électriquement au connecteur de phase via le terminal de connexion, le dispositif de protection électrique étant reçu sur la face interne, et fixé au dispositif de distribution par l'intermédiaire de l'adaptateur lorsque l'adaptateur est monté sur le dispositif de distribution.

L'invention concerne également un ensemble de distribution comprenant le système et un dispositif de distribution, configuré pour distribuer de l'énergie électrique provenant d'une source de puissance à au moins une charge électrique, la source de puissance comprenant une pluralité de phases, le dispositif de distribution comprenant un bus de puissance comprenant une pluralité de barres de phase, chaque barre de phase étant connectée électriquement à une phase respective de la source de puissance, l'adaptateur étant monté sur le dispositif de distribution.
L'invention concerne également une armoire électrique comprenant :
- un coffre, délimitant une enceinte et présentant un fond ; et
- l'ensemble de distribution,
dans lequel le dispositif de distribution est fixé sur le fond du coffre.

L'invention apparaîtra plus clairement à la lecture de la description qui va suivre, donnée uniquement à titre d'exemple non limitatif, et faite en référence aux dessins dans lesquels :
- [Fig. 1] la figure 1 est une vue en perspective partiellement éclatée d'un adaptateur et d'un dispositif de distribution ;
- [Fig. 2] la figure 2 est une coupe de la figure 1 selon le plan II ;
- [Fig. 3] la figure 3 est une coupe de l'adaptateur de la figure 2 ;
- [Fig. 4] la figure 4 est une vue de côté d'un système de protection électrique selon l'invention.

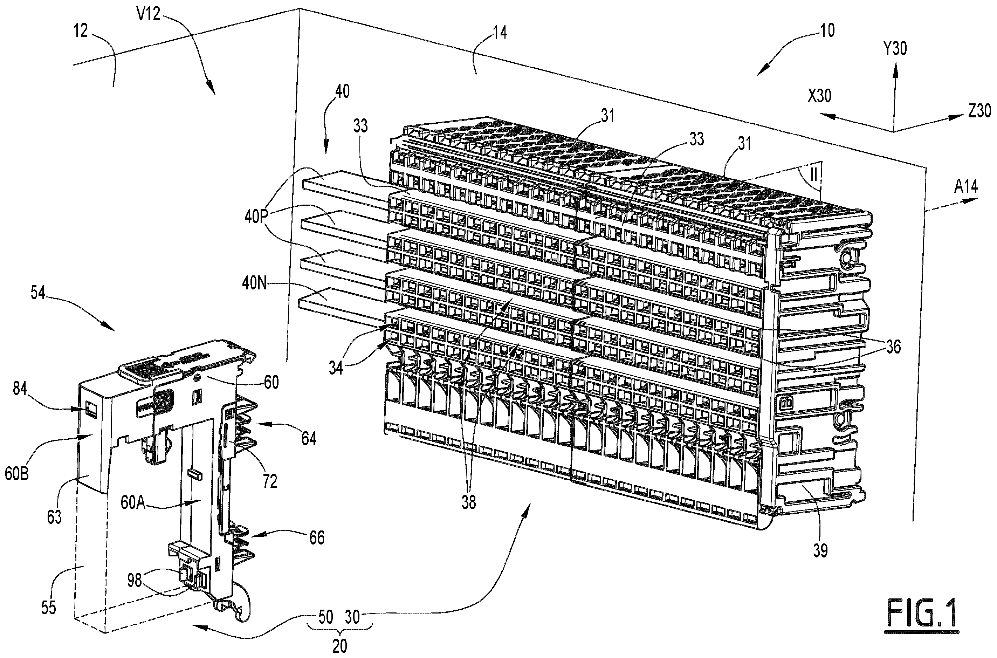

Une armoire électrique 10, conforme à l'invention, est représenté à la figure 1. L'armoire électrique 10 comprend un coffre 12, qui délimite une enceinte V12 et qui présente un fond 14. Le fond 14 s'étend globalement dans un plan orthogonal à une direction de profondeur A14. L'enceinte V12 est avantageusement refermée par une porte, qui n'est pas représentée.

L'armoire électrique 10 comprend un ensemble de distribution 20. L'ensemble de distribution 20 est avantageusement fixé sur le fond 14 du coffre 12.

En variante non représentée, l'armoire électrique 10 comprend des rails de fixation, fixés sur le fond 14 du coffre 12, et l'ensemble de distribution est fixé, ou monté, sur les rails de fixation. Dans ce cas, l'armoire électrique 10 est fixée sur le fond 14 de manière indirecte.

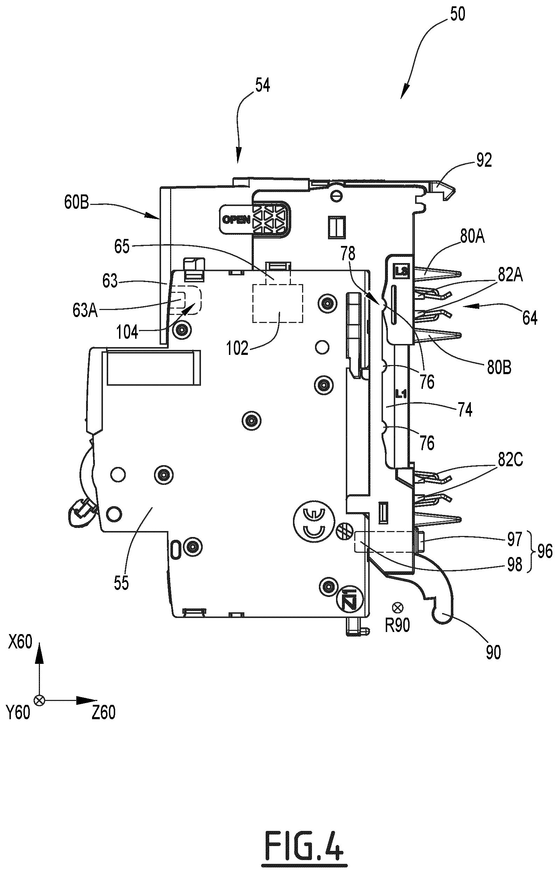

L'ensemble de distribution 20 comprend un dispositif de distribution de courant électrique 30, aussi appelé simplement dispositif de distribution, par lequel l'ensemble de distribution 20 est fixé sur le fond 14, et au moins un système de protection électrique 50. Le système de protection électrique 50 est représenté en entier à la figure 4.

L'ensemble de distribution 20 est configuré pour distribuer de l'énergie électrique provenant d'une source de puissance à au moins une charge électrique, la source de puissance délivrant un courant avec une pluralité de phases. Dans l'exemple illustré, la source de puissance est une source triphasée, délivrant un courant avec trois phases, et également un neutre.

Le dispositif de distribution 30 présente une forme allongée, qui s'étend parallèlement à une direction longitudinale principale X30. Dans l'exemple de la figure 1, lorsque l'ensemble de distribution 30 est dans une configuration normale de fonctionnement, la direction longitudinale principale X30 est parallèle au fond 14, autrement dit orthogonale à la direction de profondeur A14. De préférence, lorsque l'ensemble de distribution 20 est dans une configuration normale de fonctionnement, la direction longitudinale principale X30 est horizontale, comme illustré à la figure 1.

En variante non représentée, lorsque l'ensemble de distribution 30 est dans une configuration normale de fonctionnement, la direction longitudinale principale X30 est verticale.

On définit une direction transversale principale Y30 comme étant orthogonale à la fois à la direction de profondeur A14 et à la direction longitudinale principale X30, et une direction principale de profondeur Z30, comme étant orthogonale aux directions X30 et Y30, de sorte qu'un trièdre formé par les directions longitudinale principale X30, transversale principale Y30 et principale de profondeur Z30 soit un trièdre direct.

Le dispositif de distribution 30 comprend un support arrière 31 et un support avant 33. En pratique, le dispositif de distribution 30 comprend une pluralité de supports arrière 31, disposés les uns par rapport aux autres selon la direction longitudinale principale X30, et de supports avant 33. Sur la figure 1, deux supports arrière 31 et deux supports avant 33 sont représentés.

Les supports arrière 31 et avant 33 sont réalisés en un matériau électriquement isolant, par exemple en polymère synthétique.

Chaque support arrière 31 est fixé au fond 14, ou, en variante, à des rails de fixation eux-mêmes fixés au fond 14.

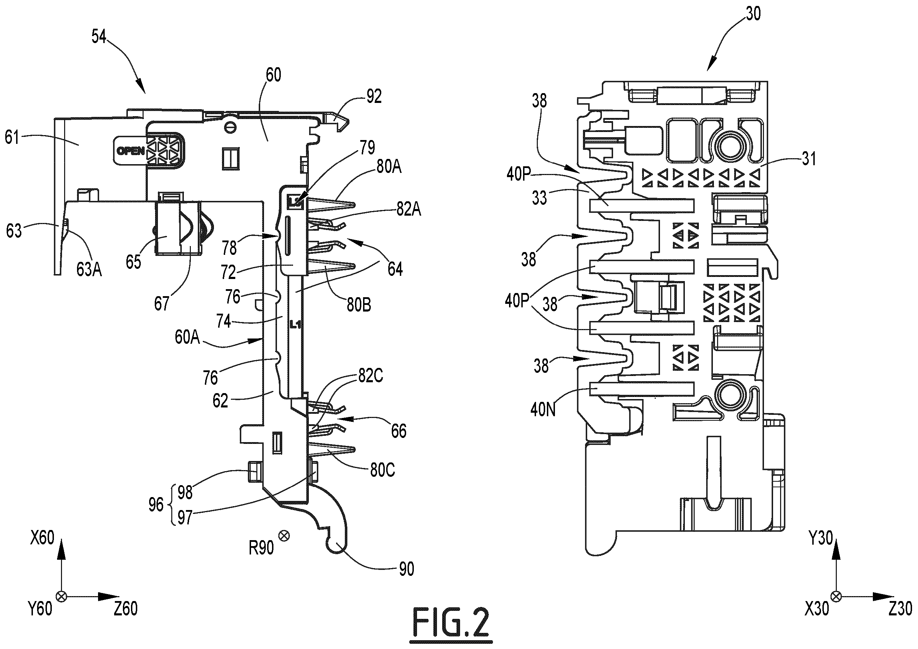

Chaque support avant 33 comprend des orifices traversants 34 selon la direction principale de profondeur Z30. Dans l'exemple des figures 1 et 2, chaque support avant 33 comprend des nervures 36, régulièrement disposées selon les directions longitudinale et transversale principales X30 et Y30, ces nervures 36 définissant les orifices traversants 34. Les orifices traversants 34 forment alors des rangées d'orifices traversants selon la direction longitudinale principale X30, les orifices traversants 34 étant également alignés selon la direction transversale principale Y30, ainsi que visible sur la figure 1.

Avantageusement, chaque support avant 33 comprend en outre des encoches de détrompage 38 disposées selon la direction longitudinale principale X30.

Chaque support avant 33 est monté sur l'un des supports arrière 31, par exemple par complémentarité de forme avec le support arrière 31. Lorsque le support avant 33 est monté sur le support arrière 31 et que le support arrière 31 est fixé au fond 14, le support avant 33 est visible et accessible par un utilisateur. Autrement dit le support avant 33 est orienté vers « l'avant » lorsque le support arrière 31 est fixé au fond.

Le dispositif de distribution 30 comprend également un bus de puissance 40, comprenant une pluralité de barres de phase 40P s'étendant parallèlement à la direction longitudinale principale X30. Avantageusement, le bus de puissance 40 comprend trois barres de phase 40P, disposées parallèlement l'une à l'autre et parallèlement à la direction longitudinale principale X30. En variante non représentée, le bus de puissance 40 comprend plus de trois barres de phase 40P.

Avantageusement, et ainsi que visible sur les figures 1 et 2, le bus de puissance 40 comprend une barre de neutre 40N, disposée parallèlement aux barres de phase 40P, les barres de phase 40P étant disposées par-delà la barre de neutre 40N selon la direction transversale principale Y30.

Les barres du bus de puissance 40 sont des parallélépipèdes rectangles, dont la plus petite dimension est mesurée selon la direction transversale Y30, ainsi que visible sur les figures 1 et 2.

Les barres 40P et 40N sont en matériau électriquement conducteur, comme un métal, et de préférence en cuivre.

Chaque barre 40P, 40N du bus de puissance 40 est insérée dans les supports arrière 31, ainsi que bien visible à la figure 2, et recouverte par les supports avant 33.

Avantageusement, le dispositif de distribution 30 comprend deux garnitures 39, une garniture étant visible sur la figure 1. Les garnitures 39 sont disposées de part et d'autre de l'ensemble des supports arrière 31 et avant 33 selon la direction longitudinale principale X30. Les garnitures 39 sont avantageusement en matériau isolant électriquement, par exemple en polymère synthétique. Les garnitures 39 protègent les extrémités des barres 40P et 40N, notamment empêchent qu'un corps étranger entre en contact avec ces dernières.

Le système de protection électrique 50 comprend un adaptateur 54 et un dispositif de protection électrique 55.

Le système de protection électrique 50 est entièrement représenté à la figure 4. Les figures 1 à 3 représentent seulement l'adaptateur 54.

L'adaptateur 54 comprend un support 60 avantageusement en matériau isolant électriquement, par exemple en polymère synthétique. Le support 60 est avantageusement formé d'une première branche 61, qui s'étend selon une direction de profondeur d'adaptateur Z60, et d'une deuxième branche 62, reliée à la première branche 61 à l'une de ses extrémités, et qui s'étend selon une direction longitudinale d'adaptateur X60, perpendiculaire à la direction de profondeur d'adaptateur Z60. Le support 60 comprend une face interne 60A configurée pour recevoir le dispositif de protection électrique 55. La face interne 60A s'étend avantageusement le long des branches 61 et 62 et est avantageusement en forme de « L ».

Avantageusement, le support 60 comprend en outre une face frontale 60B. La face frontale 60B est par exemple parallèle à la deuxième branche 62.

De manière optionnelle, le support 60 comprend un capot 63 s'étendant parallèlement à la direction longitudinale d'adaptateur X60. Le capot 63 s'étend par exemple depuis l'extrémité de la première branche 61 qui n'est pas reliée à la deuxième branche 62, parallèlement à la deuxième branche 62. Le capot 63 s'étend par exemple dans le prolongement de la face frontale 60B. Le capot 63 comprend un bouchon 63A, s'étendant depuis le capot 63 selon la direction de profondeur Z60.

L'adaptateur 54 comprend un connecteur de phase 64, s'étendant depuis le support 60 selon la direction de profondeur d'adaptateur Z60. Avantageusement, le connecteur de phase 64 s'étend depuis la deuxième branche 62, et s'étend depuis une face opposée à la face interne 60A. Le connecteur de phase 64 s'étend en s'écartant de la face interne 60A.

Avantageusement, le connecteur de phase 64 a la forme d'une pince, formée de deux mâchoires, en matériau électriquement conducteur, par exemple en métal. Le connecteur de phase 64 est configuré pour être en contact direct avec une barre de phase 40P, notamment en pinçant l'une des barres de phase 40P, lorsque l'adaptateur 54 est monté sur le dispositif de distribution 30. Par contact direct on entend un contact sans intermédiaire, c'est-à-dire que le connecteur de phase 64 et la barre de phase 40P se touchent.

L'adaptateur 54 comprend en outre un terminal de connexion électrique de phase 65, aussi appelé terminal de phase, visible à la figure 2, qui s'étend depuis le support 60. Le terminal de phase 65 s'étend avantageusement depuis la première branche 61, à partir de la face interne 60A et selon une direction opposée à la direction longitudinale d'adaptateur X60.

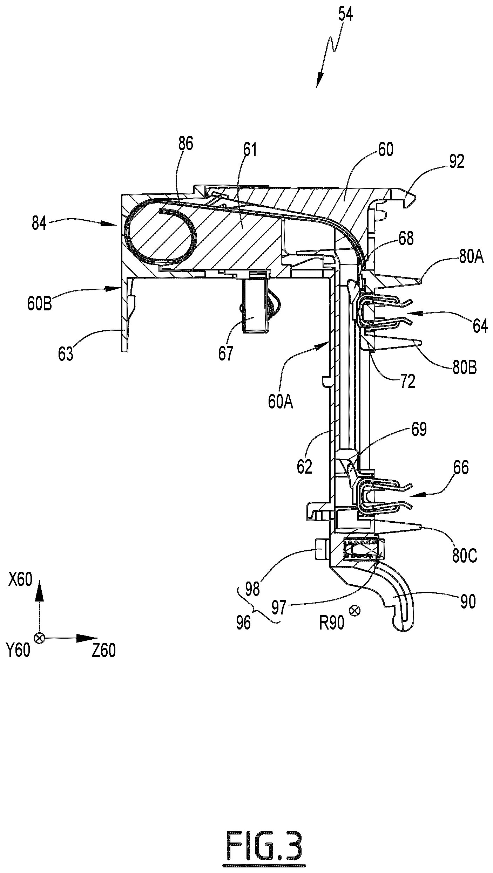

Le terminal de phase 65 est électriquement relié au connecteur de phase 64, par exemple par un câble 68 qui est partiellement visible à la figure 3.

L'adaptateur 54 comprend avantageusement un connecteur de neutre 66 et un terminal de neutre 67. Le connecteur de neutre 66 s'étend depuis le support 60 selon la direction de profondeur d'adaptateur Z60, et depuis la face opposée à la face interne 60A, et a également la forme d'une pince, par exemple en métal. Le connecteur de neutre 66 est fixe par rapport au support 60, et est configuré pour être en contact direct avec la barre de neutre 40N, en pinçant la barre de neutre 40N lorsque l'adaptateur 54 est monté sur le dispositif de distribution 30.

Le terminal de neutre 67 s'étend avantageusement depuis la première branche 61, à partir de la face interne 60A et selon une direction opposée à la direction longitudinale d'adaptateur X60. Le terminal de neutre 67 est électriquement relié au connecteur de neutre 66, par exemple par un câble 69, partiellement visible à la figure 3.

L'adaptateur 54 comprend un chariot 72, mobile en translation par rapport au support 60 parallèlement à la direction longitudinale d'adaptateur X60. Le connecteur de phase 64 est fixé au chariot 72, et est ainsi mobile avec le chariot 72 en translation par rapport au support 60. Autrement dit, le connecteur de phase 64 se déplace en même temps que le chariot 72. Il est ainsi possible pour un utilisateur, de déplacer le connecteur de phase 64 à l'aide du chariot 72 pour qu'il se trouve à une position désirée, qui permet notamment au connecteur de phase 64 d'être en contact direct avec l'une des barres de phase 40N, notamment en pinçant cette barre de phase 40P, lorsque l'adaptateur 54 est monté sur le dispositif de distribution 30.

Avantageusement, le chariot 72 coulisse le long de la deuxième branche 62 parallèlement à la direction longitudinale d'adaptateur X60. A cet effet, le support 60, et en particulier, la deuxième branche 62 comprend avantageusement une glissière 74, pour guider le mouvement du chariot 72.

Avantageusement, une course du chariot 72 et du connecteur de phase 64 parallèlement à la direction longitudinale d'adaptateur X60 comprend des positions particulières, par exemple trois positions particulières, chaque position particulière étant associée à l'une des barres de phase 40P. Afin de repérer ces positions particulières, la glissière 74 comprend des ergots, par exemple trois ergots 76 disposés le long de la glissière 74, et le chariot 72 comprend un creux 78, configuré pour coopérer avec chacun des ergots 76 par complémentarité de forme. Lorsque le creux 78 et l'un des ergots 76 coopèrent, le connecteur de phase 64 est dans l'une des positions particulières. Lorsque le connecteur de phase 64 est dans l'une des positions particulières et que l'adaptateur 54 est monté sur le dispositif de distribution 30, le connecteur de phase 64 est en contact direct avec la barre de phase 40P associée à la position particulière. La coopération entre les ergots 76 et le creux 78 est suffisamment lâche pour que l'utilisateur en poussant ou tirant à la main le chariot 72, puisse déplacer le chariot 72 jusqu'à ce que l'ergot 76 échappe au creux 78.

Avantageusement, le chariot 72 comprend une ouverture 79, et le support 60 comprend des indicateurs visuels, régulièrement disposés le long de la glissière 74, de sorte que, lorsque le connecteur de phase 64 est dans l'une des positions particulières, un indicateur visuel est visible au travers de l'ouverture 79. Avantageusement, l'indicateur visuel renseigne sur la barre de phase 40P associée à la position particulière dans laquelle se trouve le connecteur de phase 64. Par exemple, les indicateurs visuels sont « L1 », « L2 » et « L3 », « L1 » et « L3 » étant visibles sur les figures 2 et 4.

Par exemple, ainsi que visible à la figure 2, lorsque le connecteur de phase 64 est dans la position associée à la barre de phase 40P correspondant à la troisième phase, l'indicateur visuel « L3 » est visible à travers l'ouverture 79, pour indiquer que le connecteur de phase 64 est dans la position particulière associée à cette phase, ou plus précisément, à la barre de phase 40P qui correspond à la troisième phase.

Ainsi, il est possible pour l'utilisateur de choisir, en déplaçant le chariot et donc, le connecteur de phase 64, la barre de phase 40P à laquelle sera électriquement connectée le connecteur de phase 64.

Avantageusement, l'adaptateur 54 comprend, en outre, des languettes de détrompage, fixées au chariot 72. Les languettes de détrompage s'étendent depuis le chariot 72 selon la direction de profondeur d'adaptateur Z60, et sont donc mobiles avec lui. Dans l'exemple des figures 1 à 4, l'adaptateur 54 comprend deux paires de languettes de détrompage 80A et 80B. Chaque paire de languettes de détrompage 80A et 80B est disposée de part et d'autre du connecteur de phase 64 selon la direction longitudinale d'adaptateur X60 et alignée avec lui selon la direction longitudinale d'adaptateur X60.

Dans l'exemple des figures 1 à 4, les languettes de détrompage 80A appartenant à la même paire sont alignées selon une direction transversale Y60. Il en est de même pour les languettes de détrompage 80B.

Les languettes de détrompage 80A, 80B étant fixées au chariot 72, sont mobiles en translation parallèlement à la direction longitudinale d'adaptateur X60 de manière solidaire au chariot 72.

Avantageusement, l'adaptateur 54 comprend en outre des parois d'isolement, fixées au chariot 72. Les parois d'isolement s'étendent depuis le chariot 72 selon la direction de profondeur d'adaptateur Z60, et sont donc mobiles avec le chariot 72. Dans l'exemple des figures 1 à 4, l'adaptateur 54 comprend deux paires de parois d'isolement, une seule paire de parois d'isolement 82A étant visibles aux figures 2 et 4. Les paires de parois d'isolement sont disposées de part et d'autre du connecteur dans la direction transversale d'adaptateur Y60. Dans l'exemple des figures 1 à 4, les parois d'isolement d'une paire de parois d'isolement donnée, par exemple la paire de parois d'isolement 82A, sont alignées selon la direction longitudinale d'adaptateur X60. Il en est de même pour les parois d'isolement de l'autre paire de parois d'isolement.

De manière optionnelle, l'adaptateur 54 comprend une paire de languettes de détrompage supplémentaires 80C, disposée par-delà le connecteur de neutre 66 dans la direction opposée à la direction longitudinale d'adaptateur X60, et deux paires de parois d'isolement, dont seule l'une des paires 82C est visible. Les paires de parois d'isolement sont disposées de part et d'autre du connecteur de neutre 66 dans la direction transversale d'adaptateur Y60, et pour chaque paire de paroi d'isolement, les parois d'isolement de cette paire sont alignées selon la direction longitudinale d'adaptateur X60.

Avantageusement, la face frontale 60B comprend une fenêtre d'affichage 84, visible sur les figures 1 et 3. L'adaptateur 54 comprend avantageusement un ruban d'affichage 86, dont une extrémité est fixée au chariot 72, et une autre extrémité est fixée à l'intérieur du support 60. Une portion du ruban d'affichage 86, dite portion visible, est visible à travers la fenêtre d'affichage 84.

Des informations représentatives des phases sont inscrites sur le ruban d'affichage 86. Par exemple, le nom usuel des phases est inscrit sur le ruban d'affichage, par exemple « L1 », « L2 », « L3 », dans le cas où le bus de puissance 40 comprend trois barres de phase 40P.

Le ruban d'affichage 86 est configuré pour s'enrouler et se dérouler lorsque le chariot 72 translate parallèlement à la direction longitudinale d'adaptateur X60. Par exemple le ruban s'enroule lorsque le chariot 72 se déplace selon la direction longitudinale d'adaptateur X60, et se déroule lorsque le chariot 72 se déplace selon la direction opposée à la direction longitudinale d'adaptateur X60. Lorsque le ruban s'enroule et se déroule, la portion visible du ruban d'affichage 86 change. En particulier, lorsque le chariot 72 et le connecteur de phase 64 sont dans l'une des positions particulières, la portion visible du ruban d'affichage 86 comprend l'information représentative de la phase correspondant à la barre de phase 40P associée à la position particulière. Par exemple, lorsque le connecteur de phase 64 est dans la position particulière associée à la barre de phase correspondant à la première phase, la portion visible du ruban d'affichage comprend l'information « L1 », pour indiquer que le connecteur est dans la position associée à cette phase, ou plus précisément, à la barre de phase 40P qui correspond à la première phase. Il en est de même pour les autres positions particulières.

L'information sur la position du connecteur de phase 64 et la barre de phase 40P à laquelle l'adaptateur 54 est connecté une fois monté sur le dispositif de distribution 30 est ainsi facilement visible par l'utilisateur.

Afin de permettre le montage de l'adaptateur 54 sur le dispositif de distribution 30, l'adaptateur 54 comprend avantageusement des organes de fixation 90 recourbés et des crochets de fixation 92. Les organes de fixation 90 sont par exemple disposés à une extrémité de la deuxième branche 62, notamment à l'extrémité opposée de celle reliée à la première branche 61.

Les organes de fixation 90 sont configurés pour coopérer, par complémentarité de formes, avec le dispositif de distribution 30. En particulier, la forme recourbée des organes de fixation 90 signifie que l'adaptateur 54 est monté sur le dispositif de distribution 30 par un mouvement de rotation autour d'un axe de montage R90 perpendiculaire à la direction longitudinale d'adaptateur X60. L'axe de montage R90 est par exemple situé sensiblement au centre de courbure des organes de fixation 90.

Les crochets de fixation 92 s'étendent selon la direction de profondeur Z60 depuis l'extrémité de la première branche 61 reliée à la deuxième branche 62. Autrement dit, les crochets de fixation 92 sont disposés par-delà la deuxième branche 62 par rapport aux organes de fixation 90.

Les crochets de fixation 92 sont configurés pour coopérer, notamment par complémentarité de formes, avec le dispositif de distribution 30, de manière à maintenir l'adaptateur 54 monté sur le dispositif de distribution 30. Les crochets de fixation 92 sont avantageusement mobiles, à la main et sans outil, de sorte qu'un utilisateur puisse facilement les déplacer, et ainsi démonter l'adaptateur 54 du dispositif de distribution 30.

Avantageusement, l'adaptateur 54 comprend un verrou 96, formé d'un bouton 97 et de deux dents 98. Le verrou 96 est disposé sur la deuxième branche 62, par exemple à proximité de l'organe de fixation 90. Les dents 98 s'étendent perpendiculairement à la deuxième branche 62. Les dents 98 sont mobiles entre une position de verrouillage et une position de déverrouillage. Dans la position de verrouillage, les dents 98 sont en saillie de la face interne 60A selon une direction opposée à la direction de profondeur d'adaptateur Z60. Dans la position de déverrouillage, les dents 98 sont escamotées, au moins partiellement, dans la branche 62. Le verrou 96 se déplace dans la position de verrouillage lorsque le bouton 97 est pressé, et dans la position de déverrouillage lorsque le bouton 97 est relâché.

Le dispositif de protection électrique 55 est par exemple un disjoncteur électromécanique, par exemple un disjoncteur miniature, ou MCB, de l'anglais « Miniature Circuit Breaker ». Le dispositif de protection électrique 55 comprend une borne d'entrée de phase 102, visible à la figure 4, et avantageusement, une borne d'entrée de neutre, non visible sur la figure 4. Le dispositif de protection électrique 55 de la figure 4 est dit P+N.

Le dispositif de protection électrique 55 est configuré pour interrompre le courant en cas de défaut électrique, par exemple en cas de surintensité ou de court-circuit.

Un calibre des dispositifs de protection électrique 55 dépend du dispositif de protection électrique 55 spécifique. Par exemple, le dispositif de protection électrique 55 a un calibre de 40 ampères. En variante, le calibre du dispositif de protection électrique 55 est de 60 ampères, ou un autre calibre.

Dans la figure 4, le dispositif de protection électrique 55 est reçu par l'adaptateur 54, en étant reçu sur la face interne 60A.

Lorsque le dispositif de protection électrique 55 est reçu sur la face interne 60A, la borne d'entrée de phase 102 est électriquement connectée au terminal de phase 65, par exemple en recevant le terminal de phase 65, ainsi que visible en pointillés sur la figure 4. De même, la borne d'entrée de neutre est électriquement connectée au terminal de neutre 67, par exemple en recevant le terminal de neutre 67. La borne d'entrée de phase 102 est ainsi électriquement connectée au connecteur de phase 64 via le câble 68 et le terminal de phase 65, et la borne d'entrée de neutre est électriquement connectée au connecteur de neutre 66 via le câble 69 et le terminal de neutre 67.

Le dispositif de protection électrique 55 comprend dans l'exemple des figures 1 à 4, un orifice d'accès 104 à la borne d'entrée 102. Lorsque le dispositif de protection électrique est reçu sur la face interne 60A, l'orifice d'accès 104 reçoit le bouchon 63A, qui bouche ainsi l'accès à la borne d'entrée 102. Le positionnement et l'insertion du bouchon 63A dans l'orifice d'accès 104 sont réalisés par déformation élastique du capot 63.

Ainsi, la fixation du dispositif de protection électrique 55 au dispositif de distribution 30 est effectuée par l'intermédiaire de l'adaptateur 54, lorsque l'adaptateur est monté sur le dispositif de distribution 30.

Une fois que le dispositif de protection électrique 55 est reçu sur la face interne 60A, formant ainsi le système de protection électrique 50, l'utilisateur déplace le chariot 72, déplaçant ainsi le connecteur de phase 64 jusqu'à la position particulière désirée. Cette position est, de préférence, l'une des positions particulières. L'utilisateur choisit ainsi à quelle barre de phase 40P le connecteur de phase 64 sera connecté une fois monté. Une telle information est visible, à la fois via l'ouverture 79 du chariot 72, et via la portion du ruban d'affichage 86 visible à travers la fenêtre d'affichage 84.

En variante, l'utilisateur déplace le chariot 72 avant que le dispositif de protection électrique 55 soit reçu sur la face interne 60A.

L'utilisateur approche le système de protection électrique 50 du dispositif de distribution 30, de sorte que les connecteurs de phase et de neutre 64 et 66 sont orientés vers le dispositif de distribution 30. Par un mouvement de rotation du système de protection électrique 50 autour de l'axe de montage R90 rapprochant la deuxième branche 62 et les connecteurs de phase 64 et de neutre 66 du dispositif de distribution 30, l'utilisateur engage les organes de fixation 90 dans le dispositif de distribution 30, avantageusement dans le support arrière 31. Les crochets de fixation 92 viennent également en prise avec le support arrière 31 et maintiennent le système de protection électrique 50 monté sur le dispositif de distribution 30.

Le connecteur de phase 64 est mis en contact direct avec la barre de phase 40P associée à la position particulière dans laquelle il se trouve, en traversant les orifices 34, à raison d'une mâchoire du connecteur de phase 64 par orifice 34 et en pinçant la barre de phase 40P, et le connecteur de neutre 66 est mis en contact avec la barre de neutre 40N, en pinçant la barre de neutre 40N également à travers les orifices 34. Le connecteur de phase 64 est ainsi électriquement connecté à la barre de phase 40P, et le connecteur de neutre 66 est ainsi électriquement connecté à la barre de neutre 40N. Le dispositif de protection électrique 55 est ainsi électriquement connecté au bus de puissance 40.

Une fois le système de protection électrique 50 est monté sur le dispositif de distribution 30, les directions principale de profondeur Z30 et de profondeur d'adaptateur Z60 sont parallèles, les directions longitudinale principale X30 et transversale d'adaptateur Y60 sont parallèles et les directions transversale principale Y30 et longitudinale d'adaptateur X60 sont parallèles.

La mise en contact des connecteurs 64 et 66 avec les barres de phase 40P et de neutre 40PN est possible car, lorsque le connecteur de phase 64 est dans une position particulière, indexée via la coopération entre les ergots 76 et le creux 78 du chariot 72, le chariot 72 est dans une position telle que les languettes de détrompage 80 peuvent être insérées dans les encoches de détrompage 38. Si le connecteur de phase 64 n'est pas dans l'une des positions particulières, les languettes de détrompage 80 butent contre les nervures 36, empêchant ainsi de monter le système de protection électrique 50 sur le dispositif de distribution 30.

Les parois d'isolement permettent d'éviter qu'un utilisateur montant le système de protection électrique 50 sur le dispositif de distribution 30 ne touche les connecteurs de phase 64 ou de neutre 66, notamment au moment de la mise en contact entre les connecteurs de phase 64 et de neutre 66 avec les barres 40P et 40N.

Lorsque le système de protection électrique 50 est monté sur le dispositif de distribution 30, le support arrière 31 ou le support avant 32 appuient sur le bouton 97, déplaçant le verrou 96 dans la position de verrouillage. Les dents 98 viennent en prise avec un organe de verrouillage du dispositif de protection électrique 55, non représenté, et verrouillent le dispositif de protection électrique 55 sur l'adaptateur 54. L'utilisateur ne peut ainsi pas retirer le dispositif de protection électrique 55 en laissant l'adaptateur 54 monté sur le dispositif de distribution 30. Il doit démonter l'ensemble du système de protection électrique 50.

Pour démonter le système de protection électrique 50, un mouvement de démontage, opposé au mouvement de montage, est effectué, c'est-à-dire un mouvement de rotation autour de l'axe de montage R90, éloignant la deuxième branche 62 et les connecteurs de phase 64 et de neutre 66 du dispositif de distribution 30.

Avantageusement, avant de réaliser le mouvement de démontage, l'utilisateur déplace les crochets de fixation 92 par exemple en appuyant dessus avec un doigt, libérant le système de protection électrique, qui peut alors être démonté via le mouvement de démontage.

Ainsi, que ce soit lors du montage ou du démontage du système de protection électrique 50, il n'est pas nécessaire d'interrompre l'alimentation électrique dans le dispositif de distribution 30 pour monter l'adaptateur 54 sur le dispositif de distribution 30 afin de fixer le système de protection électrique 50, et donc le dispositif de protection électrique 55 sur le dispositif de distribution 30.

En variante non représentée, le dispositif de protection électrique 55 comprend une seule borne d'entrée, qui est une borne d'entrée de phase, il est alors dit P, ou encore plusieurs bornes d'entrée de phase, par exemple trois, avec ou sans borne d'entrée de neutre, il est alors dit 3P et 3P+N, respectivement. Dans le cas où le dispositif de protection électrique 55 est un dispositif de type P, il est reçu sur un adaptateur comprenant un unique connecteur de phase. Dans le cas d'un dispositif de protection 3P ou 3P+N, le dispositif de protection est reçu sur un adaptateur comprenant plusieurs connecteurs de phase, disposés selon la direction transversale d'adaptateur X60. Dans ce cas, avantageusement, l'adaptateur 54 comprend plusieurs terminaux de phase, chacun étant électriquement connecté à l'un des connecteurs de phase, et plusieurs chariots, un connecteur de phase étant associé à un chariot, et chaque connecteur de phase étant mobile en translation avec le chariot auquel il est associé, parallèlement à la direction longitudinale d'adaptateur X60. Il est ainsi possible de choisir la position de chaque connecteur de phase indépendamment de celle des autres connecteurs de phase.

Toute caractéristique décrite pour un mode de réalisation ou une variante dans ce qui précède peut être mise en œuvre pour les autres modes de réalisation et variantes décrits précédemment, pour autant que techniquement faisable.

## Revendications

1. Adaptateur (54), configuré pour être monté sur un dispositif de distribution de courant électrique (30) comprenant un bus de puissance (40) avec une pluralité de barres de phase (40P), l'adaptateur (54) comprenant :
- un support (60), comprenant une face interne (60A) configurée pour recevoir un dispositif de protection électrique (55) ;
le dispositif de protection électrique (55) étant reçu sur la face interne (60A) et fixé au dispositif de distribution (30) par l'intermédiaire de l'adaptateur (54) lorsque l'adaptateur (54) est monté sur le dispositif de distribution (30) ;
**caractérisé en ce que** l'adaptateur (54) comprend, en outre :
- un connecteur de phase (64), s'étendant depuis le support (60) selon la direction de profondeur d'adaptateur (Z60), configuré pour être en contact direct avec une barre de phase (40P) ;
- un terminal de connexion électrique de phase (65), s'étendant depuis le support (60), connecté électriquement au connecteur de phase (64) et configuré pour être électriquement connecté à une borne d'entrée de phase (102) du dispositif de protection électrique (55) ; et
- un chariot (72), mobile en translation par rapport au support (60) parallèlement à une direction longitudinale d'adaptateur (X60), configuré pour être disposé en regard de la pluralité de barres de phase (40P), selon une direction de profondeur d'adaptateur (Z60), lorsque l'adaptateur (54) est monté sur le dispositif de distribution (30), le connecteur de phase (64) étant fixé au chariot (72) et mobile avec le chariot (72) en translation par rapport au support (60), afin d'être mis en contact direct avec une barre de phase (40P) donnée, et d'être connecté électriquement à la barre de phase (40P) donnée lorsque l'adaptateur (54) est monté sur le dispositif de distribution (30).

2. Adaptateur (54) selon la revendication 1, comprenant en outre :
- un connecteur de neutre (66), fixe par rapport au support (60), configuré pour être en contact direct avec une barre de neutre (40N) du bus de puissance (40), et connecté électriquement à la barre de neutre (40N) lorsque l'adaptateur (54) est monté sur le dispositif de distribution (30) ; et
- un terminal de connexion électrique de neutre (67), s'étendant depuis le support (60), connecté électriquement au connecteur de neutre (66) et configuré pour être électriquement connecté à une borne d'entrée de neutre du dispositif de protection électrique (55).

3. Adaptateur (54) selon l'une quelconque des revendications précédentes, dans lequel une course du chariot et du connecteur de phase parallèlement à la direction longitudinale d'adaptateur (X60) comprend trois positions particulières, chaque position particulière étant associée à une barre de phase (40P), et lorsque l'adaptateur (54) est monté sur le dispositif de distribution (30) et que le connecteur de phase (64) est dans l'une des positions particulières, le connecteur de phase (64) est en contact direct avec une barre de phase (40P) associée à la position particulière.

4. Adaptateur (54) selon la revendication 3, dans lequel :
- le support (60) comprend une glissière (74), s'étendant selon l'axe longitudinal d'adaptateur (X60), la glissière (74) comprenant trois ergots (76) disposés selon l'axe longitudinal d'adaptateur (X60) ; et
- le chariot (72) comprend un creux (78), et le chariot (72) est configuré pour translater selon l'axe longitudinal d'adaptateur (X60) en coulissant le long de la glissière (74), et les ergots (76) sont disposés le long de la glissière (74) de sorte que lorsque le creux (78) et l'un des ergots (76) coopèrent par complémentarité de forme, le connecteur de phase (64) est dans l'une des positions particulières.

5. Adaptateur (54) selon l'une quelconque des revendications 3 à 4, comprenant en outre des languettes de détrompage (80A, 80B), fixées au chariot (72), s'étendant depuis le chariot (72) selon la direction de profondeur d'adaptateur (Z60), disposées de part et d'autre du connecteur de phase (64) selon la direction longitudinale d'adaptateur (X60), alignées avec le connecteur de phase (64) selon la direction longitudinale d'adaptateur (X60), et mobiles en translation parallèlement à la direction longitudinale d'adaptateur (X60) de manière solidaire au chariot (72), dans lequel
l'adaptateur (54) est montable sur le dispositif de distribution (30) uniquement lorsque le connecteur de phase (64) est dans l'une des positions particulières, et
lorsque l'adaptateur (54) est monté sur le dispositif de distribution (30), les languettes de détrompage (80A, 80B) coopèrent par complémentarité de formes avec des encoches (38) du dispositif de distribution (30) pour que le connecteur de phase (64) soit en contact direct avec la barre de phase (40P) associée à la position particulière.

6. Adaptateur (54) selon l'une quelconque des revendications 3 à 5, dans laquelle le support (60) comprend une face frontale (60B), la face frontale (60B) comprenant une fenêtre d'affichage (84), et l'adaptateur (54) comprend un ruban d'affichage (86), une extrémité du ruban d'affichage (86) étant fixée au chariot (72), le ruban d'affichage (86) étant configuré pour s'enrouler et se dérouler lorsque le chariot (72) translate parallèlement à la direction longitudinale d'adaptateur (X60), des informations représentatives des barres de phases étant inscrites sur le ruban d'affichage (86), une portion visible du ruban d'affichage (86) étant visible à travers la fenêtre d'affichage (84), et lorsque le connecteur de phase (64) est dans l'une des positions particulières, la portion visible du ruban d'affichage (86) comprend l'information représentative de la barre de phase (40P) correspondant à la barre de phase (40P) associée à la position particulière.

7. Adaptateur (54) selon l'une quelconque des revendications précédentes, dans lequel le support (60) comprend en outre un capot (63) s'étendant selon une direction longitudinale d'adaptateur (X60), le capot (63) comprenant un bouchon (63A), s'étendant depuis le capot (63) selon la direction de profondeur d'adaptateur (Z60) et, lorsque l'adaptateur (54) est monté sur le dispositif de distribution (30), le bouchon (63A) est inséré dans un orifice d'accès (104) à la borne d'entrée (102) du dispositif de protection électrique (55) pour boucher l'orifice d'accès (104).

8. Adaptateur (54) selon l'une quelconque des revendications précédentes, comprenant des organes de fixation (90), recourbés, qui sont configurés pour coopérer par complémentarité de formes avec le dispositif de distribution (30), de sorte que l'adaptateur (54) est monté sur le dispositif de distribution (30) par un mouvement de rotation autour d'un axe de montage (R90) perpendiculaire à la direction longitudinale d'adaptateur (X60).

9. Adaptateur (54) selon l'une quelconque des revendications précédentes, dans lequel le support (60) comprend un verrou (96), formé d'un bouton (97) et de deux dents (98) mobiles entre une position de verrouillage, dans laquelle les dents (98) sont en saillie de la face interne (60A), et une position de déverrouillage, dans laquelle les dents (98) sont escamotées, et lorsque l'adaptateur (54) est monté sur le dispositif de distribution (30), le dispositif de distribution (30) appuie sur le bouton (97) et déplace les dents (98) en position de verrouillage, qui viennent en prise avec un organe de verrouillage du dispositif de protection électrique (55), afin de verrouiller le dispositif de protection électrique (55) sur l'adaptateur (54).

10. Adaptateur (54) selon l'une quelconque des revendications précédentes, comprenant des parois d'isolement (82A), fixées au chariot (72) et s'étendant depuis le chariot (72) selon la direction de profondeur d'adaptateur (Z60), les parois d'isolement (82A) étant disposées de part et d'autre du connecteur de phase (64) selon une direction transversale d'adaptateur (Y60).

11. Système de protection électrique (55) comprenant un adaptateur (54) selon l'une quelconque des revendications précédentes et un dispositif de protection électrique (55), comprenant une borne d'entrée de phase (102), connectée électriquement au connecteur de phase (64) via le terminal de connexion (65), le dispositif de protection électrique (55) étant reçu sur la face interne (60A), et fixé au dispositif de distribution (30) par l'intermédiaire de l'adaptateur (54) lorsque l'adaptateur (54) est monté sur le dispositif de distribution (30).

12. Ensemble de distribution (20) comprenant le système (50) selon la revendication 11 et un dispositif de distribution (30), configuré pour distribuer de l'énergie électrique provenant d'une source de puissance à au moins une charge électrique, la source de puissance comprenant une pluralité de phases, le dispositif de distribution (30) comprenant un bus de puissance (40) comprenant une pluralité de barres de phase (40P), chaque barre de phase (40P) étant connectée électriquement à une phase respective de la source de puissance, l'adaptateur (54) étant monté sur le dispositif de distribution (30).

13. Armoire électrique (10), comprenant :
- un coffre (12), délimitant une enceinte (V12) et présentant un fond (14) ; et
- l'ensemble de distribution (20) selon la revendication 12,
dans lequel le dispositif de distribution (30) est fixé sur le fond (14) du coffre (12).
